# EUROPEAN PATENT SPECIFICATION

(11) **EP 2 402 233 B1**
(45) Date of publication and mention of the grant of the patent: **05.08.2015**
(21) Application number: 11171695.7
(22) Date of filing: 28.06.2011
(51) Int. Cl.: B62D 1/184

(54) **Steering Column Apparatus**
Lenksäulenvorrichtung
Appareil de colonne de direction

(30) Priority: 30.06.2010 JP 2010148412
(43) Date of publication of application: 04.01.2012
(73) Proprietor: FUJI KIKO Co., Ltd., Kosai-shi, Shizuoka 431-0431 (JP)
(72) Inventor: Lin, Mintong, Kosai-shi, Shizuoka 431-0431 (JP); Warashina, Toshihiko, Kosai-shi, Shizuoka 431-0431 (JP); Sakata, Toru, Kosai-shi, Shizuoka 431-0431 (JP)
(74) Representative: Grünecker Patent- und Rechtsanwälte PartG mbB

(56) References cited:
- EP-A1- 0 019 571
- EP-A1- 0 058 495

## Description

### BACKGROUND OF THE INVENTION

This invention relates to a steering column apparatus, and more specifically to a steering column apparatus which has a mechanism arranged to adjust a position of a steering wheel, and which is devised to improve a workability of an assembly operation of the steering column apparatus. A steering column apparatus according to the preamble of claim 1 is known from EP 0 019 571 A1.

A steering column apparatus includes a tilt mechanism arranged to adjust a position of a steering wheel in upward and downward directions in accordance with a physical constitution and a posture of a driver, and a telescopic mechanism arranged to adjust a position of the steering wheel in forward and rearward directions in accordance with the physical constitution and the posture of the driver. In these tilt mechanism and telescopic mechanism, it is required that the steering column is not moved in the upward direction or in the forward direction in case of a secondary collision of the driver against the steering wheel in case of a collision of the vehicle. Heretofore, there has been proposed a structure in which a plurality of frictional plates are alternately superimposed and firmly clamped.

A European Patent Application Publication No. 1384644 (corresponding to Japanese Patent Application Publication No. 2002-46623) discloses a conventional steering column apparatus including a plurality of frictional plates. In this steering column apparatus, large discs and small discs are alternately mounted on a tightening rod to increase frictional resistance.

This steering column apparatus includes a bracket member 1 fixed on a vehicle body depicted within FIG. 4 of EP 1 384 644; a guide member 2 provided through a pin 6 to the bracket member 1 to be swung in the upward and downward directions; a column pipe 3 supported by the guide member 2 to be slid in an axial direction (in leftward and rightward directions in the drawing); a cover tube 4; and a steering shaft 5 provided within the column pipe 3 through the cover tube 4. An inclination of the steering shaft 5 can be adjusted (tilt adjustment) by swinging the guide member 2 with respect to the bracket member 1. Moreover, a length of the column pipe 3 can be adjusted (telescopic adjustment) by sliding the column pipe 3 in the axial direction with respect to the guide member 2. Between the bracket member 1 and the guide member 2, there is provided a first fixing holding device. The first fixing holding device and a second fixing holding device include a tightening member 9 constituted by a common tightening pin 7 and a common cam member 10.

As shown in FIG. 3 of EP 1 384 644, the first fixing holding device includes a disc set 15. As shown in FIG. 6 of EP 1 384 644, this disc set 15 includes a plurality of large discs (fixing plate) 16 having cutout 18 formed in parallel with a hole (tilt elongated hole) 71 of the bracket member 1, and a plurality of small discs (movable plates) 17. The plurality of the large discs 16 and the small discs 17 are combined, and these are sandwiched between an abutment plate 14 and a sandwiching jaw 13, and connected by four guide pins 24,
so that the disc set 15 is constituted. Moreover, there is provided a tightening pin 7 and the sandwiching jaw 13. The cam member 10 is rotated to tighten, and the guide member 2 is held with respect to the bracket member 1 by frictional resistances between abutment surfaces of the abutment plate 14, the small discs 17, the large discs 16, and the sandwiching jaw 13.

As shown in FIG. 6 of EP 1 384 644, the large discs 16, the small discs 17, the abutment plate 14, and the sandwiching jaw 13 are unified (unitized) by connecting by the four guide pins 24. With this, the workability of the assembly operation is improved.

However, in the above-described steering column apparatus of EP 1 384 644, there are provided the four guide pins 24 for unifying in addition to the originally necessary components. Accordingly, the size of the unit is increased. Therefore, the layout is limited.

### SUMMARY OF THE INVENTION

It is, therefore, an object of the present invention to provide a steering column apparatus devised to solve the above-described problems.

According to one aspect of the present invention, a steering column apparatus comprises: a jacket which includes a lower jacket and an upper jacket, and which is supported through a column bracket to a vehicle body; a steering shaft rotatably supported within the jacket; at least one of a tilt mechanism which serves as the column bracket, and which is arranged to fix the jacket so that the jacket is moved in an upward direction and in a downward direction about a pivot shaft disposed at a front portion of the vehicle, and a telescopic mechanism arranged to fix the jacket to move one of the upper jacket and the lower jacket in an axial direction with respect to the other of the upper jacket and the lower jacket; a side bracket which serves as the column bracket, which is disposed at a rear portion of the vehicle body, and which has a hole; a distance bracket integral with the jacket, and which has a hole; a clamp mechanism which is arranged to fix the movable jacket to the side bracket by pressing the distance bracket against the side bracket in a state to confront the side bracket so that the distance bracket is abutted on the side bracket, the clamp mechanism including; a lock bolt inserted into the hole of the side bracket and the hole of the distance bracket, a fixing cam which is penetrated by the lock bolt, which is arranged to be moved along the lock bolt, and which is restricted from rotating, a movable cam which is penetrated by the lock bolt, and which is arranged to push the fixing cam toward one end portion of the lock bolt by being rotated, and an operation lever provided to the movable cam, the side bracket and the distance bracket being sandwiched and tightened between the fixing cam and the one end portion of the lock bolt, a movable flange which is provided to at least one of the fixing cam's side and the one end portion's side of the lock bolt, and which includes a shaft portion protruding in the axial direction of the lock bolt; a movable plate which is disposed between the movable flange and the side bracket, and which includes an insertion hole into which the shaft portion of the movable flange is inserted; a frictional plate that is disposed between the movable flange and the movable plate, that includes an elongated hole which extends in a direction of the movement of the jacket, and into which the shaft portion of the movable flange is inserted, and that includes at least one end connected with the side bracket or the distance bracket, at least one of the holes of the side bracket and the distance bracket being formed into an elongated hole extending along the direction of the movement of the jacket, the shaft portion of the movable flange having a noncircular section having parallel surfaces engaged with inner walls of the elongated hole of the side bracket and the distance bracket, a restriction section provided in the movable plate and the shaft portion of the movable flange, and arranged to restrict the movable plate from moving from a predetermined axial position of the shaft portion of the movable flange in a direction in which the movable plate is detached from the shaft portion of the movable flange.

### BRIEF DESCRIPTION OF THE DRAWINGS

FIG. 1 is an exploded perspective view showing a frictional plate unit in a steering column apparatus according to a first embodiment of the present invention.
FIG. 2 is a view showing an assembled state of the frictional plate unit of FIG. 1.
FIG. 3 is an exploded perspective view showing the steering column apparatus according to the first embodiment of the present invention.
FIG. 4 is a side view showing the steering column apparatus of FIG. 3.
FIG. 5 is a plan view showing the steering column apparatus of FIG. 3.
FIG. 6 is a cross section showing the steering column apparatus of FIG. 3.
FIG. 7 is an exploded perspective view showing a frictional plate unit in a steering column apparatus according to a second embodiment of the present invention.
FIG. 8 is a view showing an assembled state of the frictional plate unit of FIG. 7.
FIG. 9 is an exploded perspective view showing a frictional plate unit in a steering column apparatus according to a third embodiment of the present invention.
FIG. 10 is a view showing an assembled state of the frictional plate unit of FIG. 9.

### DETAILED DESCRIPTION OF THE INVENTION

Hereinafter, steering column apparatus according to first to third embodiments of the present invention are illustrated.

### (a) First Embodiment

First, a steering column apparatus according to the first embodiment of the present invention is illustrated.

### (Structure)

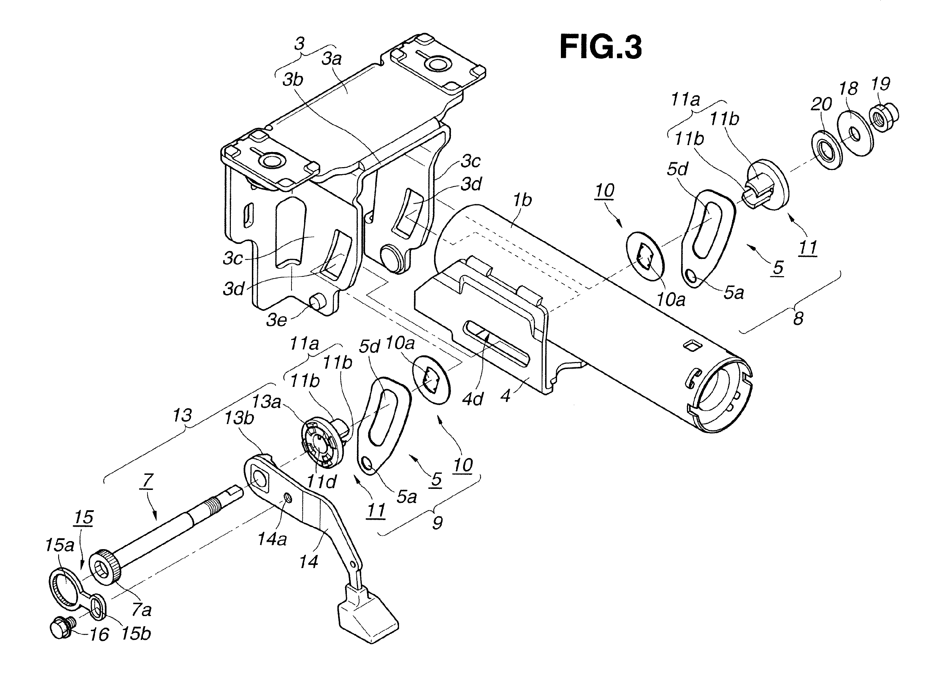

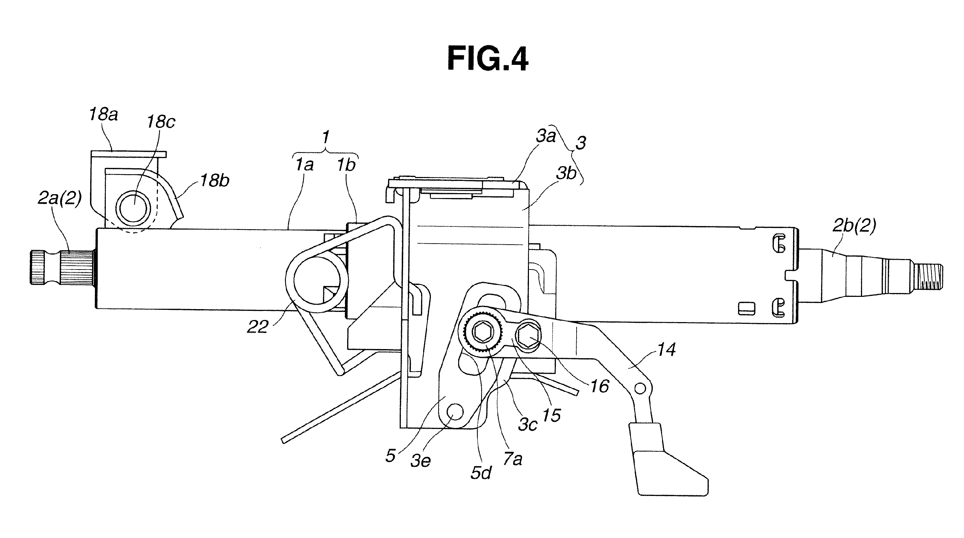

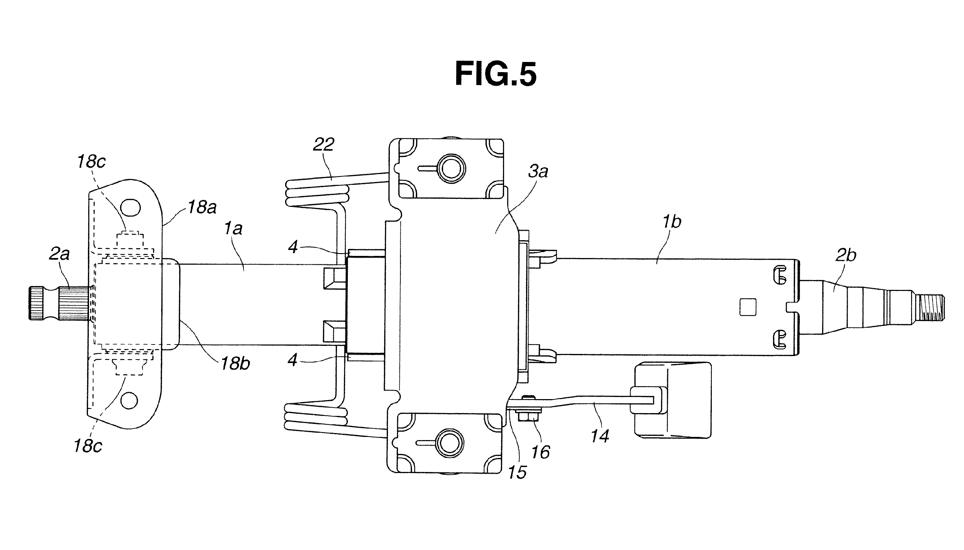

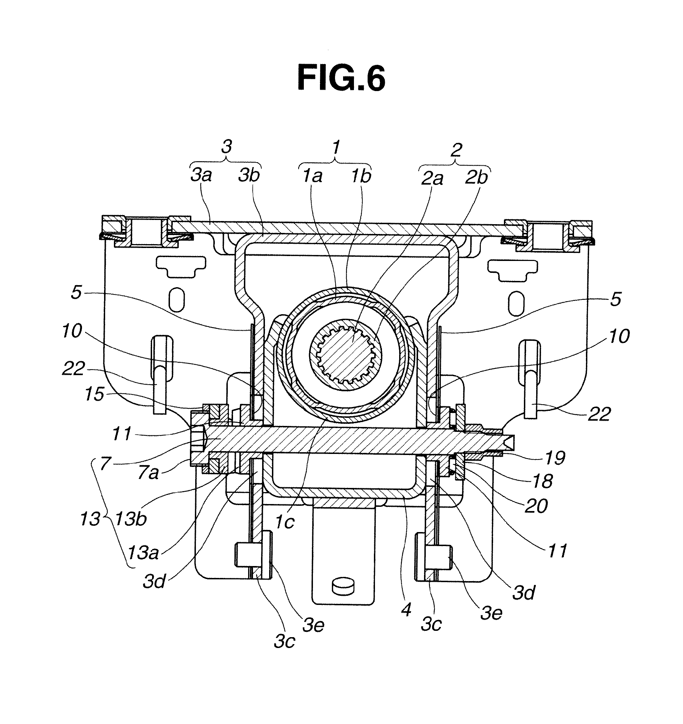

A basic structure of the steering column apparatus is illustrated with reference to FIGS. 3-6. As shown in FIG. 4, a jacket 1 includes a lower jacket 1a, and an upper jacket 1b which includes a lower end portion mounted on an upper end portion of the lower jacket 1a to cover the upper end portion of the lower jacket 1a, and which is arranged to be slidably moved in an axial direction. A telescopic steering shaft 2 is rotatably supported within the jacket 1. The steering shaft 2 includes a lower shaft 2a and a hollow upper shaft 2b which are connected by serration to be telescopic, as shown in FIG. 6.

As shown in FIGS. 3 and 6, there is provided a vehicle body side bracket 3 which serves as a column bracket for mounting the jacket 1 to the vehicle body, and which is disposed at a rear portion of the vehicle body. The vehicle body side bracket 3 includes a mounting portion 3a mounted to the vehicle body; a sandwiching portion 3b which has an inverse U-shape, and which is arranged to sandwich the upper jacket 1b; and a pair of side brackets 3c which are provided at both end portions of the sandwiching portion 3b, and which extend vertically in the downward direction.

The lower portion of the upper jacket 1b is disposed between the pair of the side brackets 3c. A distance bracket 4 is disposed below a lower surface of the lower end portion of the upper jacket 1b. Upper end portions of the distance bracket 4 are connected integrally with the upper jacket 1b by welding. The distance bracket 4 is bent into a substantially U-shape. The pair of the side brackets 3c are disposed to sandwich the distance bracket 4 to confront side surfaces of the distance bracket 4.

Moreover, there is provided a clamp mechanism 13 which is arranged to press the pair of the side brackets 3c against the distance bracket 4 from the both sides so that the pair of the side brackets 3c are abutted on the distance bracket 4, and thereby to fix the jacket 1 to the pair of the side brackets 3c. The clamp mechanism 13 includes a lock bolt 7, a fixing cam 13a, a movable cam 13b and so on.

In this embodiment, there is provided a tilt mechanism. The tilt mechanism includes a vehicle body side bracket 18a which serves as the column bracket, and which is connected with the vehicle body at a front portion of the vehicle body; a lower bracket 18b connected with the lower jacket 1a; and a pivot shaft 18c. The vehicle body side bracket 18a and the lower bracket 18b are pivotally provided through the pivot shaft 18c. The jacket 1 is fixed to the pair of the side brackets 3c to be swung about the pivot shaft 18c in the upward and downward directions. Each of the side brackets 3 includes a tilt elongated hole 3d receiving the lock bolt 7. Each of the tilt elongated holes 3d is formed into a shape extending along an arc (in the swing direction of the jacket 1) around the pivot shaft 18c. Furthermore, in this embodiment, there is provided a telescopic mechanism arranged to fix the upper jacket 1b to be slidably moved in the axial direction with respect to the lower jacket 1a. The distance bracket 4 includes telescopic elongated holes 4d extending in the axial direction of the jacket 1 (in the sliding direction of the jacket 1). The lock bolt 7 is inserted into the tilt elongated holes 3d and the telescopic elongated holes 4d.

The fixing cam 13a is penetrated by the lock bolt 7 on a head portion 7a's side which is opposite to a tip end portion that is one end portion of the lock bolt 7. The fixing cam 13a is provided to be moved along the lock bolt 7 so that the rotation of the fixing cam 13a is restricted. On the other hand, the movable cam 13b is penetrated by the lock bolt 7 on the head portion 7a's side. The movable cam 13b is arranged to push, by being rotated, the fixing cam 13a which is restricted from rotating, toward the tip end portion of the lock bolt 7 that is the one end portion of the lock bolt 7. The fixing cam 13a includes a higher portion, a bottom portion, and a taper portion which are formed on a surface of the fixing cam 13a that confronts the movable cam 13b. The taper portion of the fixing cam 13a connects the higher portion and the bottom portion of the fixing cam 13a. On the other hand, the movable cam 13b includes a protruding portion which is formed on a surface of the movable cam 13b that confronts the fixing cam 13a, and which is arranged to push the higher portion, the bottom portion, and the taper portion.

Moreover, there is provided an operation lever 14 for rotating the movable cam 13b. This operation lever 14 is arranged to rotate as a unit with the movable cam 13b and the lock bolt 7. That is, the movable cam 13b is fixed at a base end portion of the operation lever 14. A lock plate 15 includes circular portions located on the both end portions of the lock plate 15. The lock plate 15 includes a circular hole 15a formed in the circular portion of one end portion of the lock plate 15. The head portion 7a of the lock bolt 7 is mounted in the circular hole 15a through serration. The lock plate 15 further includes an elongated hole 15b formed in the circular portion of the other end portion of the lock plate 15. A bolt 16 is inserted into the elongated hole 15b, and screwed into a screw hole 14a formed near the base end portion of the operation lever 14.

Furthermore, there are provided (two) tilt frictional plates 5 each of which serves as a frictional plate, and each of which is arranged to increase friction between one of the pair of the side brackets 3c fixed to the vehicle body, and the distance bracket 4 integral with (unified with) the swingable upper jacket 1b. Each of the tilt frictional plates 5 is unified with a movable flange 11 or the fixing cam 13a serving also as the movable flange, and a movable plate 10.

In this embodiment, as shown in FIG. 3, the movable flanges 11, the movable plates 10, and the tilt frictional plates 5 are disposed, respectively, on the both sides of the fixing cam 13's side and the tip end portion side of the lock bolt 7, that is, on both outer sides of the distance bracket 4. Each of the movable flanges 11 includes a shaft portion 11a protruding in the axial direction of the lock bolt 7. Each of the movable plates 10 is disposed between one of the movable flanges 11 and one of the side brackets 3c. Each of the movable plates 10 includes an insertion hole 10a into which the shaft portion 11a is inserted. Each of the tilt frictional plates 5 is disposed between one of the movable flanges 11 and one of the movable plates 10. Each of the tilt frictional plates 5 includes a tilt elongated hole 5d into which the corresponding shaft portion 11a is inserted. Moreover, each of the tilt frictional plates 5 includes a penetrating hole 5a which is located at a lower end portion of the tilt frictional plate 5. Each of the tilt frictional plates 5 is connected with one of the side brackets 3c by inserting a support pin 3e provided at the lower portion of the one of the side bracket 3c, into the penetrating hole 5a.

A nut 19 serving as the one end portion of the lock bolt 7 is screwed on the tip end portion of the lock bolt 7. One of the movable flanges 11 is disposed between the nut 19 and one of the side brackets 3c.

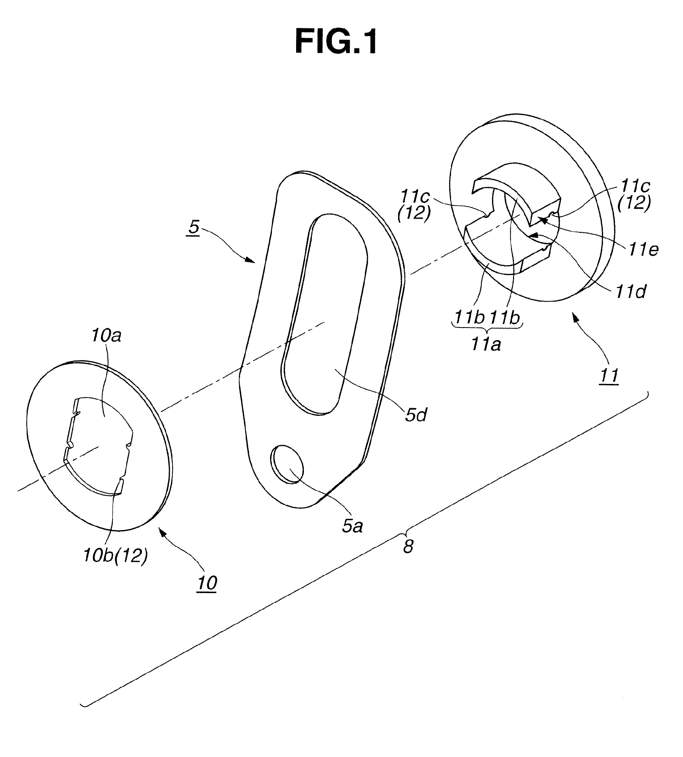

Next, main parts of the present invention are illustrated. As shown in FIG. 1, the shaft portion 11a of the movable flange 11 includes a pair of columnar shaft forming portions 11b each of which has an arc section, which are located in positions symmetrical to each other with respect to an axial center of the shaft portion 11a, which is mounted in the tilt elongated hole 3d of the side bracket 3c to restrict rotation of the movable flange 11 as shown in FIG. 6, and between which the lock bolt 7 is inserted. Each of the shaft forming portions 11b has a shape whose the both sides of the cylindrical portion is cut in the axial direction in a parallel manner, and which has a noncircular sectional shape having parallel surfaces engaged with inner walls of the tilt elongated hole 3d. The movable flange 11 includes an insertion hole 11d into which the lock bolt 7 is inserted. On the other hand, the insertion hole 10a of the movable plate 10 into which the shaft portion 11a is inserted has a noncircular shape corresponding to the sectional shape of the shaft portion 11a.

The shaft portion 11a of the movable flange 11 is inserted into the tilt elongated hole 5d of the tilt frictional plate 5, and the insertion hole 10a of the movable plate 10. In the movable plate 10 and the shaft portion 11a, there is provided a restriction section 12 arranged to restrict the movable plate 10 from moving in a direction to be detached from a predetermined position in the axial direction of the shaft portion 11. This restriction section 12 unifies (unitizes) the movable flange 11, the tilt frictional plate 5, and the movable plate 10, so that frictional plate units 8 and 9 are constituted. The assembly operation that these frictional plate units 8 and 9 are mounted on the lock bolt 7 is troublesome. Accordingly, these components are previously assembled so that each of the frictional plate units 8 and 9 is assembled as one component. In this state, the steering column apparatus is assembled.

As shown in FIG. 1, the restriction section 12 includes recessed portions 11c each of which is recessed in one of the pair of the shaft forming portions 11a toward the outer circumference in positions corresponding to one of the end portions of the arc section of the one of the pair of the shaft forming portions limb. That is, each of the shaft portions 11a has a structure whose the cylinder is cut by two parallel surfaces. The four recessed portions 11c are formed along the parallel surfaces 11e which are the cut surfaces, in positions to confront each other. Moreover, the restriction section 12 includes four raised portions 10b which can be elastically deformed, which are formed on the movable plate 10, each of which extends toward the insertion hole 10a from one of the two parallel inner side surfaces confronting each other, in a substantially perpendicular direction, and each of which is bent toward one of the four recessed portions 11c. By engaging the four raised portions 10b with the four recessed portions 11c, it is possible to prevent the movable plate 10 from being detached from the shaft portion 11a. The positions of the recessed portions 11c of the shaft portions 11a are set to form clearances for sliding movement between the movable flange 11, the tilt frictional plate 5, and the movable plate 10 when the clamp mechanism 13 is brought to the lock release state.

The lock bolt 7 is inserted into these frictional plate units 8 and 9. The nut 19 is screwed on the tip end portion of the lock bolt 7 through a collar 18. The nut 19 is fixed on the tip end portion of the lock bolt 7 by staking. A thrust bearing 20 is disposed between the collar 18 and the movable flange 11.

With this, the tilt frictional plate 5 and the movable plate 10 are disposed between the movable flange 11 and the side bracket 3c. The restriction section 12 is formed only in the shaft portion 11 and the movable plate 10 which is adjacent to the side bracket 3c. In this embodiment, the set of the tilt frictional plate 5 and the movable plate 10 is one set. However, a plurality of the tilt frictional plates 5 and a plurality of the movable plates 10 may be alternately disposed, so that plural sets of the tilt frictional plate 5 and the movable plate 10 are provided.

Moreover, as shown in FIGS. 4-6, there is provided a holding spring 22 arranged to hold the jacket 1 so that the jacket 1 is not moved in the downward direction by own weigh when the lock bolt 7 is loosened by pivoting the operation lever 14.

### (Operation)

Next, the operation of the steering column apparatus is illustrated. At the tilt adjustment, the operation lever 14 is pivoted so that the movable cam 13b is pivoted. With this, the protruding portion of the movable cam 13b is moved from the higher portion of the fixing cam 13a through the taper portion of the fixing cam 13a to the lower portion of the fixing cam 13a, so that the fixing cam 13a is moved near the movable cam 13b. Accordingly, the lock bolt 7 is loosened. Consequently, the jacket 1 can be pivoted about the pivot shaft 18c by moving the bolt 7a along the tilt elongated holes 3d and 5d. With this, it is possible to adjust the height position of the steering wheel (not shown) by the tilt adjustment. After the tilt adjustment is finished, the lock bolt 7 is tightened by pivoting the operation lever 14 in a direction opposite to the above-described direction. As shown in FIG. 6, the movable plate 10 and the movable flange 11 (or the fixing cam 13a) which are arranged to be moved in the upward and downward directions integrally with the lock bolt 7 with respect to the side brackets 3c and the tilt frictional plates 5 which are fixed are frictionally contacted on the both sides of the jacket 1. Accordingly, the frictional resistance is increased due to the increase of the number of the frictional plates. Therefore, the tilt slippage is not likely to be generated when the force in the upward direction is acted to the steering wheel by (in, in case of) the secondary collision of the driver to the steering wheel (not shown).

In this embodiment, the shaft portion 11a of the movable flange 11 (the fixing cam 13a) is inserted into the tilt elongated hole 5d of the tilt frictional plate 5 and the insertion hole 10a of the movable plate 10. The frictional plate units 8 and 9 are previously assembled so that the restriction section 12 restricts the movable plate 10 from being detached from the shaft portion 11a due to the movement of the movable plate 10 in the axial direction. Then, the lock bolt 7 is inserted into the shaft portion 11a of the frictional plate units 8 and 9. In this state, the steering column apparatus is assembled.

In the steering column apparatus according to this embodiment, the restriction section 12 is provided in the movable plate 10 and the shaft portion 11a of the movable flange 11 (the fixing cam 13a) which are necessary (essential) components. With this, the movable flange 11 (the fixing cam 13a), the tilt frictional plate 5, and the movable plate 10 are unified (unitized) as the frictional plate units 8 and 9. Accordingly, there is no need to provide other components in addition to the necessary components, unlike the conventional steering column apparatus. Therefore, it is possible to decrease the number of the components, and to decrease the sizes of the frictional plate units 8 and 9.

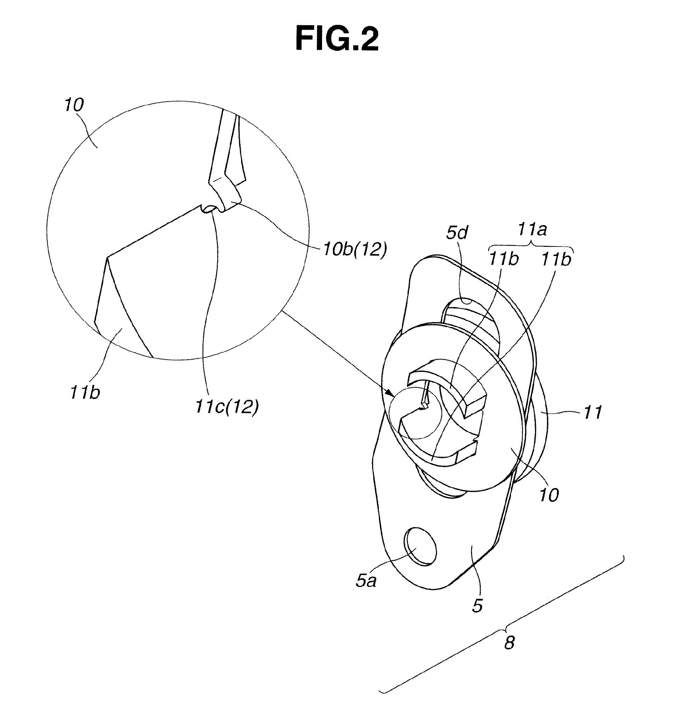

In this steering column apparatus according to the embodiment, the movable plate 10 is mounted on the shaft portion 11a of the movable flange 11 (the fixing cam 13a) so that the movable plate 10 is pushed against the movable flange 11 until the elastically deformable raised portions 10b formed on the insertion hole 10a of the movable plate 10 enter the recessed portions 11c formed in the shaft portion 11a of the movable flange 11 (the fixing cam 13a) toward the outer circumference. As shown in FIG. 2, the raised portions 10b enter the recessed portions 11c, so that the movable plate 10 is restricted to be moved along the shaft portion 11a of the movable flange 11 (the fixing cam 13a). Accordingly, it is possible to prevent the movable plate 10 from being detached from the shaft portion 11 a .

In this steering column apparatus according to the embodiment of the present invention, the movable plate 10 is merely pushed so that the elastically deformable raised portions 10b protruding from the movable plate 10 to the insertion hole 10a enter the recessed portions 11c formed in the shaft portion 11a of the movable flange 11 (the fixing cam 13a). Accordingly, it is possible to improve the workability of the assembly operation of the frictional plate units 8 and 9.

In this steering column apparatus according to the embodiment of the present invention, the tilt frictional plates 5 and the movable plates 10 having no restriction section 12 are alternately mounted on the shaft portion 11a of the movable flange 11. Finally, the movable plate 10 with the restriction section 12 is mounted on the shaft portion 11a of the movable flange 11. Accordingly, the restriction section 12 restricts the finally-mounted movable plate 10 from moving along the shaft portion 11a of the movable flange 11. Therefore, it is possible to prevent the tilt frictional plates 5 and the movable plates 10 from being detached from the shaft portion 11a.

In this steering column apparatus according to the embodiment of the present invention, the restriction section 12 is provided only to the movable plate 10 which is finally mounted on the shaft portion 11a of the movable flange 11. Accordingly, it is possible to decrease the man-hour of the processing of the shaft portion 11a and the movable plate 10.

### (b) Second Embodiment

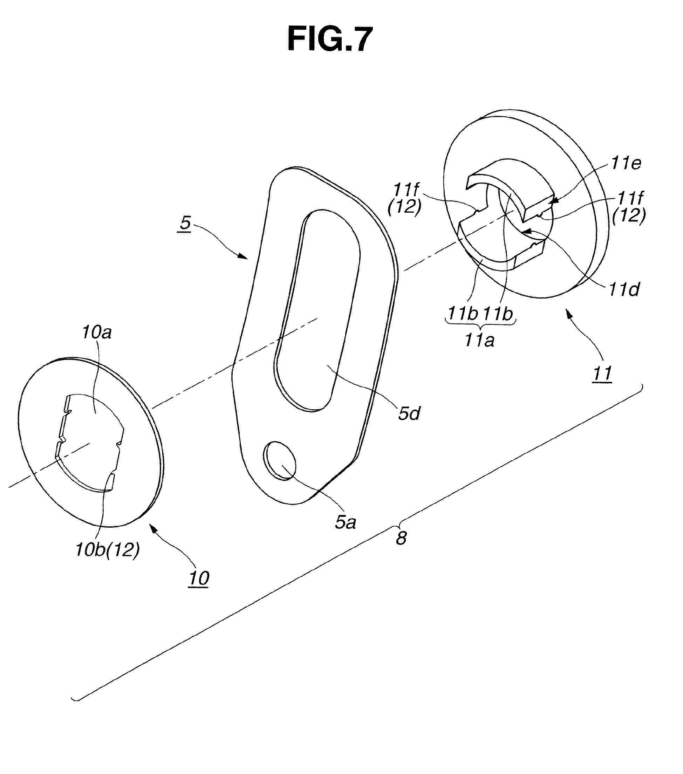

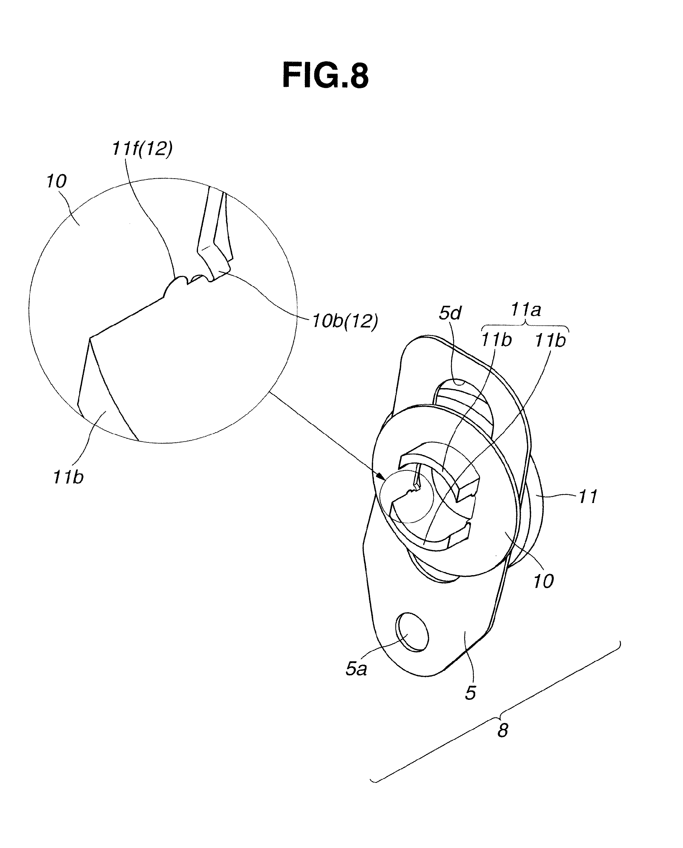

Next, a steering column apparatus according to a second embodiment of the present invention is illustrated. FIGS. 7 and 8 show a frictional plate unit in a steering column apparatus according to the second embodiment of the present invention. The frictional plate units 8 and 9 of FIGS. 7 and 8 are substantially identical to the frictional plate units according to the first embodiment in most aspects as shown by the use of the same reference numerals. In this second embodiment, a part of the restriction section 12 is varied changed from the restriction section 12 in the first embodiment. Accordingly, the overlapped illustrations are omitted, and different parts are illustrated.

### (Structure)

As shown in FIG. 7, the shaft portion 11a of the movable flange 11 includes four raised portions 11f, in place of the four recessed portions 11c of the shaft forming portions 11b of the first embodiment. The four raised portions 11f are formed along the parallel surfaces 11e in positions to confront each other.

### (Operation)

In this steering column apparatus according to the second embodiment, the movable plate 10 is mounted on the shaft portion 11a of the movable flange 11, and the movable plate 10 is pressed against the movable flange 11 so that the elastically deformable raised portions 10b formed in the insertion hole 10a of the movable plate 10 cross over (go over) the raised portions 11f formed in the shaft portions 11a of the movable flange 11. With this, as shown in FIG. 8, it is possible to restrict the movable plate 10 from moving along the shaft portion 11a of the movable flange 11, and to prevent the movable plate 10 from being detached from the shaft portion 11a.

In this steering column apparatus according to this embodiment, the movable plate 10 is merely pushed so that the elastically-deformable raised portions 10b protruding from the movable plate 10 toward the insertion hole 10a cross over the raised portions 11f formed on the shaft portion 11a of the movable flange 11. Accordingly, it is possible to improve the workability of the assembly operation of the frictional plate units 8 and 9.

Moreover, the shaft portion 11a of the fixing cam 13a includes the raised portions 11f identical to the above-described raised portions 11f. These structures and functions are identical to the above-described structures and functions, and accordingly the illustrations are omitted.

### (c) (Third Embodiment)

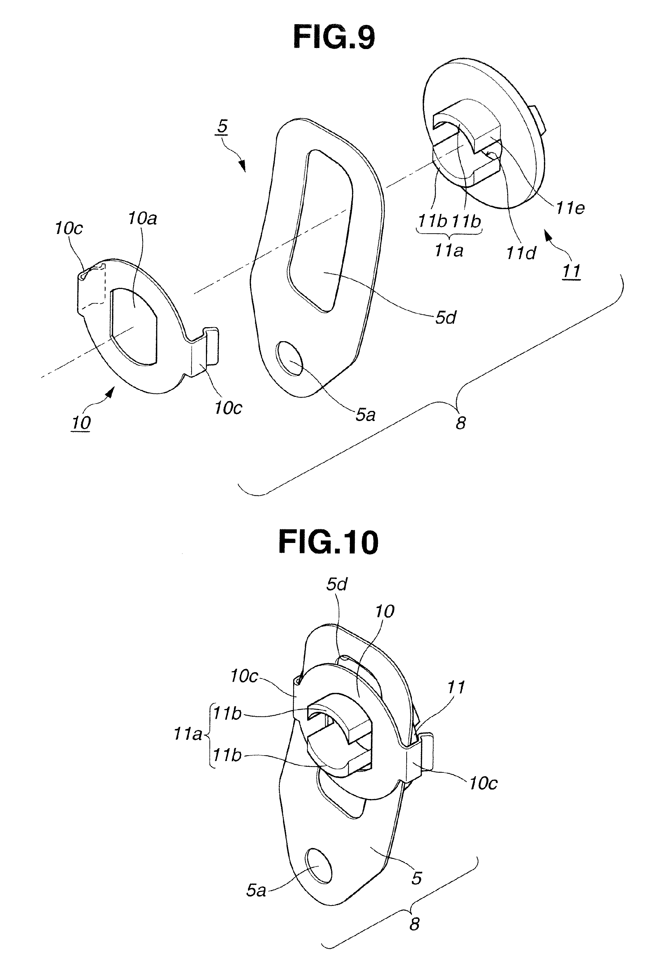

A steering column apparatus according to a third embodiment of the present invention is illustrated. FIGS. 9 and 10 show a frictional plate unit in a steering column apparatus according to a third embodiment of the present invention. The frictional plate units 8 and 9 of FIGS. 9 and 10 are substantially identical to the frictional plate units according to the first embodiment in most aspects as shown by the use of the same reference numerals. In this steering column apparatus according to the third embodiment, a part of the restriction section 12 is merely varied from the restriction section 12 in the steering column apparatus according to the first embodiment. Accordingly, the overlapped illustrations are omitted, and different parts are illustrated.

### (Structure)

As shown in FIG. 9, the restriction section 12 includes a pair of engagement portions 10c which are formed at the outer circumference portion of the movable plate 10, which are arranged to be engaged with the outer circumference portion of the movable flange 11, and which are elastically deformable. The engagement portions 10c extend from the outer circumference portion of the movable plate 10 in the axial direction. Then, tip end portions of the engagement portions 10c are bent in a direction to approach each other with respect to base end sides of the engagement portions 10c. Then, tip ends of the engagement portions 10c are bent to return in a separating direction to separate from each other.

### (Operation)

In the steering column apparatus according to this embodiment, the movable plate 10 is mounted on the shaft portion 11a of the movable flange 11 so that the pair of the elastically-deformable engagement portions 10c on the outer circumference portion of the movable plate 10 are pushed against the movable flange 11 in the axial direction. The engagement portions 10c once bend in the outside direction, and returned. With this, the engagement portions 10c cross over the movable flange 11, and are mounted on the outer circumference portion of the movable flange 11. With this, it is possible to restrict the movable plate 10 from moving along the shaft portion 11a of the movable flange 11, and thereby to prevent the movable plate 10 from being detached from the shaft portion 11a.

In this steering column apparatus according to the third embodiment, the assembly operation is performed by pushing the movable plate 10 along the shaft portion 11a of the movable flange 11 to a position in which the pair of the engagement portions 10c which are formed on the outer circumference portion of the movable plate 10 are engaged with the outer circumference portion of the movable flange 11. Accordingly, it is possible to improve the workability of the assembly operation. Moreover, the engagement portions 10c restrict the rotation of the tilt frictional plate 5. Therefore, it is possible to improve the workability of the assembly operation when the frictional plate unit 8 is assembled on the side portion of the side bracket 3c.

Moreover, the movable plate 10 is also mounted on the shaft portion 11a of the fixing cam 13a. Similarly, this movable plate 10 includes a pair of the identical engagement portions 10c located on the outer circumference portion of the movable plate 10. However, these structures and functions are identical to those of the above-described structures and functions, and accordingly the overlapped illustrations are omitted.

In the steering column apparatus according to the first to third embodiments, the frictional plate units are provided on the both sides of the side brackets. However, the frictional plate unit may be disposed on one side of one of the side brackets. Moreover, in the steering column apparatus according to the first to third embodiments, there are provided both of the tilt mechanism and the telescopic mechanism. However, it is optional to provide one of the tilt mechanism and the telescopic mechanism. In a case in which the only telescopic mechanism is provided, a support pin is provided to protrude on the front side of the distance bracket 4. The through hole 5a of the tilt frictional plate 5 is mounted on this support pin of the distance bracket 4. The elongated hole 5d is disposed in parallel with the telescopic elongated hole 4d of the distance bracket 4. With this, the frictional plates constitutes the telescopic frictional plate.

In a case in which both of the tilt frictional plate and the telescopic frictional plate are provided, one tilt frictional plate including at least one end connected with the side bracket, and one telescopic frictional plate including at least one end connected with the distance bracket may be provided between the movable flange and the movable plate. Moreover, a plurality of the tilt frictional plates and a plurality of the telescopic frictional plates may be alternately provided between the movable flange and the movable plate. In this case, at the final step, the movable plate with the restriction section is mounted.

In this case, the tilt frictional plates and the telescopic frictional plates are alternately disposed between the movable flange and the movable plate, so that the frictional plate unit is constituted. In the steering column apparatus according to the first and second embodiment, the components of the restriction section do not exist in a position radially outside the shaft portion of the movable flange, unlike the third embodiment. Accordingly, it is possible to provide both of the tilt frictional plates and the telescopic frictional plates between the movable flange and the movable plate.

Moreover, in the steering column apparatus according to the first to third embodiments, the pair of the side brackets is disposed on the both sides of the distance bracket so that the pair of the side brackets sandwiches the distance bracket. However, the side bracket may be disposed only on one side of the distance bracket, and the one end portion of the lock bolt may press the distance bracket against the side bracket.

Moreover, in the steering column apparatus according to the first to third embodiments, the shaft portion of the movable flange has the noncircular section in which parts of the cylinder is cut in the parallel manner. However, in the present invention, it is preferable that the shaft portion of the movable flange has a pair of parallel surfaces. Accordingly, for example, the shaft portion of the movable flange may have the rectangular shape. In this case, the recessed portions and the raised portions may be formed in an angular portion and a planar portion of the rectangular shape.

A steering column apparatus according to the embodiments of the present invention includes; a jacket which includes a lower jacket and an upper jacket, and which is supported through a column bracket to a vehicle body; a steering shaft rotatably supported within the jacket; at least one of a tilt mechanism which serves as the column bracket, and which is arranged to fix the jacket so that the jacket is moved in an upward direction and in a downward direction about a pivot shaft disposed at a front portion of the vehicle, and a telescopic mechanism arranged to fix the jacket to move one of the upper jacket and the lower jacket in an axial direction with respect to the other of the upper jacket and the lower jacket; a side bracket which serves as the column bracket, which is disposed at a rear portion of the vehicle body, and which has a hole; a distance bracket integral with the jacket, and which has a hole; a clamp mechanism which is arranged to fix the movable jacket to the side bracket by pressing the distance bracket against the side bracket in a state to confront the side bracket so that the distance bracket is abutted on the side bracket, the clamp mechanism including; a lock bolt inserted into the hole of the side bracket and the hole of the distance bracket, a fixing cam which is penetrated by the lock bolt, which is arranged to be moved along the lock bolt, and which is restricted from rotating, a movable cam which is penetrated by the lock bolt, and which is arranged to push the fixing cam toward one end portion of the lock bolt by being rotated, and an operation lever provided to the movable cam, the side bracket and the distance bracket being sandwiched and tightened between the fixing cam and the one end portion of the lock bolt, a movable flange which is provided to at least one of the fixing cam's side and the one end portion's side of the lock bolt, and which includes a shaft portion protruding in the axial direction of the lock bolt; a movable plate which is disposed between the movable flange and the side bracket, and which includes an insertion hole into which the shaft portion of the movable flange is inserted; a frictional plate that is disposed between the movable flange and the movable plate, that includes an elongated hole which extends in a direction of the movement of the jacket, and into which the shaft portion of the movable flange is inserted, and that includes at least one end connected with the side bracket or the distance bracket, at least one of the holes of the side bracket and the distance bracket being formed into an elongated hole extending along the direction of the movement of the jacket, the shaft portion of the movable flange having a noncircular section having parallel surfaces engaged with inner walls of the elongated hole of the side bracket and the distance bracket, a restriction section provided in the movable plate and the shaft portion of the movable flange, and arranged to restrict the movable plate from moving from a predetermined axial position of the shaft portion of the movable flange in a direction in which the movable plate is detached from the shaft portion of the movable flange.

In the steering column apparatus according to the embodiments of the present invention, the shaft portion of the movable flange is inserted into at least one of the elongated hole of the tilt frictional plate and the elongated hole of the telescopic frictional plate, and the insertion hole of the movable plate. The restriction section restricts the movable plate from being detached from the shaft portion due to the movement of the movable plate in the axial direction, so that the frictional plate unit is previously constituted. The lock bolt is inserted into the shaft portion of the frictional plate unit. In this state, the steering column apparatus is assembled.

Moreover, the restriction section is provided in the movable plate and the shaft portion of the movable flange which are necessary components. Moreover, the frictional plate having the one end at least connected with at least one of the jacket and the distance bracket is sandwiched between the movable flange and the movable plate to unify the frictional plate, the movable flange, and the movable plate. Accordingly, it is unnecessary to provide other members in addition to the necessary components, unlike the conventional steering column apparatus. Therefore, it is possible to decrease the number of the components, and to decrease the size of the unit.

In the steering column apparatus according to the embodiments of the present invention, the restriction section includes a recessed portion formed in the shaft portion in a predetermined axial position, and a raised portion which is elastically deformable, which is formed in the movable plate, which protrudes from the movable plate toward the insertion hole of the movable plate, and which is arranged to be engaged with the recessed portion of the shaft portion. The restriction section includes a raised portion formed in the shaft portion in a predetermined axial position, and a raised portion which is elastically deformable, which is formed in the movable plate, which protrudes from the movable plate toward the insertion hole of the movable plate, and which is arranged to be engaged with the raised portion of the shaft portion.

In the steering column apparatus according to the embodiments of the present invention, the movable plate is mounted on the shaft portion of the movable flange, and the movable plate is pressed against the movable flange until the resiliently deformable raised portion formed in the insertion hole of the movable plate enters the recessed portion formed in the shaft portion of the movable flange, or until the resiliently deformable raised portion of the movable plate crosses over (goes over) the raised portion formed in the shaft portion of the movable flange. With this, it is possible to restrict the movable plate from moving along the shaft portion of the movable flange, and thereby to prevent the movable plate from being detached from the shaft portion. Moreover, it is possible to improve the workability of the assembly operation of the frictional plate unit.

In the steering column apparatus according to the embodiments of the present invention, the restriction section includes a pair of engagement portions formed in an outer circumference portion of the movable plate, which is elastically deformable, and which is arranged to be engaged with an outer circumference portion of the movable flange.

In the steering column apparatus according to the embodiments of the present invention, the movable plate is mounted on the shaft portion of the movable flange so that the pair of the resiliently deformable engagement portions on the outer circumference portion of the movable plate is mounted on the outer circumference portion of the movable flange. With this, it is possible to restrict the movable plate from moving along the shaft portion of the movable flange, and thereby to prevent the movable plate from being detached from the shaft portion.

Moreover, in the assembly operation of the steering column apparatus, the movable plate is pressed along the shaft portion of the movable flange to a position in which the pair of the resiliently deformable engagement portions provided on the outer circumference portion of the movable plate are engaged with the outer circumference portion of the movable flange. Accordingly, it is possible to improve the workability of the assembly operation. Moreover, the engagement portions restrict the rotation of the frictional plate. Therefore, it is possible to improve the workability of the frictional plate unit is assembled on the side portion of the side bracket.

In the steering column apparatus according to the embodiments of the present invention, a plurality of the frictional plates and a plurality of the movable plates are alternately disposed between the movable flange and the side bracket; and the restriction section is provided only to the shaft portion and the movable plate which is adjacent to the side bracket.

In the steering column apparatus according to the embodiments of the present invention, the frictional plates and the movable plates having no restriction section are alternately mounted on the shaft portion of the movable flange. Finally, the movable plate having the restriction section is mounted on the shaft portion of the movable flange. With this, the restriction section restricts the movement of the finally-mounted movable plate along the shaft portion of the movable flange. Accordingly, it is possible to prevent all of the frictional plates and the movable plates from being detached from the shaft portion.

Moreover, the restriction section is provided only to the movable plate which is finally mounted on the shaft portion of the movable flange. Accordingly, it is possible to decrease the man-hour of the processing of the shaft portion and the movable plate.

In the steering column apparatus according to the embodiment, the steering column apparatus further includes a tilt frictional plate having one end connected with the side bracket (3), and a telescopic frictional plate having one end connected with the distance bracket (4); and the tilt frictional plate and the telescopic frictional plate are disposed between the movable flange (11) and the movable plate (10). (K5)

In the steering column apparatus according to the embodiment, the components of the restriction section are not disposed radially outside the shaft portion of the movable plate. Accordingly, it is possible to provide both of the tilt frictional plate and the telescopic frictional plate alternately between the movable flange and the movable plate, so that the frictional plate unit is constituted.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A steering column apparatus comprising:
a jacket (1) which is supported through a column bracket (3, 18a-18c) to a vehicle body;
a steering shaft (2) rotatably supported within the jacket (1);
at least one of a tilt mechanism (18a-18c) which serves as the column bracket (3, 18a-18c), and which is arranged to fix the jacket (1) so that the jacket (1) is moved in an upward direction and in a downward direction about a pivot shaft (18c) disposed at a front portion of the vehicle, and a telescopic mechanism (4d) arranged to fix the jacket (1) to move one of the upper jacket (1 b) and the lower jacket (1 a) in an axial direction with respect to the other of the upper jacket (1 b) and the lower jacket (1 a);
a side bracket (3) which serves as the column bracket (3, 18a-18c), which is disposed at a rear portion of the vehicle body, and which has a hole (3d);
a distance bracket (4) integral with the jacket (1), and which has a hole (4d);
a clamp mechanism (13) which is arranged to fix the movable jacket (1) to the side bracket (3c) by pressing the distance bracket (4) against the side bracket (3c) in a state to confront the side bracket (3c) so that the distance bracket (4) is abutted on the side bracket (3c), the clamp mechanism (13) including;
a lock bolt (7) inserted into the hole (3d) of the side bracket (3c) and the hole (4d) of the distance bracket (4), and
an operation lever (14),
the side bracket (3c) and the distance bracket (4) being sandwiched and tightened, a movable flange (11);
a movable plate (10) which is disposed between the movable flange (11) and the side bracket (3c), and which includes an insertion hole (10a);
a frictional plate (5) that is disposed between the movable flange (11) and the movable plate (10), that includes an elongated hole (5d) which extends in a direction of the movement of the jacket (1), and that includes at least one end connected with the side bracket (3c) or the distance bracket (4),
at least one of the holes (3d; 4d) of the side bracket (3c) and the distance bracket (4) being formed into an elongated hole (3d; 4d) extending along the direction of the movement of the jacket (1),
**characterized in that**
the jacket (1) includes a lower jacket (1a) and an upper jacket (1b),
the clamp mechanism (13) further includes;
a fixing cam (13a) which is penetrated by the lock bolt (7), which is arranged to be moved along the lock bolt (7), and which is restricted from rotating, and
a movable cam (13b) which is penetrated by the lock bolt (7), and which is arranged to push the fixing cam (13a) toward one end portion of the lock bolt (7) by being rotated,
the operation lever (14) is provided to the movable cam (13b),
the side bracket (3c) and the distance bracket (4) are sandwiched and tightened between the fixing cam (13a) and the one end portion of the lock bolt (7),
the movable flange (11) is provided to at least one of the fixing cam's side and the one end portion's side of the lock bolt (7), and includes a shaft portion (11 a) protruding in the axial direction of the lock bolt (7);
the shaft portion (11a) of the movable flange (11) is inserted into the insertion hole (10a) of the movable plate (10) and into the elongated hole (5d) of the frictional plate (5);
the shaft portion (11a) of the movable flange (11) having a noncircular section having parallel surfaces engaged with inner walls of the elongated hole (3d; 4d)) of the side bracket (3c) and the distance bracket (4), and
a restriction section (12) is provided in the movable plate (10) and the shaft portion (11a) of the movable flange (11), and arranged to restrict the movable plate (10) from moving from a predetermined axial position of the shaft portion (11a) of the movable flange (11) in a direction in which the movable plate (10) is detached from the shaft portion (11a) of the movable flange (11).

2. The steering column apparatus as claimed in claim 1, wherein the restriction section (12) includes a recessed portion (11c) formed in the shaft portion (11a) in a predetermined axial position, and a raised portion (10b) which is elastically deformable, which is formed in the movable plate (10), which protrudes from the movable plate (10) toward the insertion hole (10a) of the movable plate (10), and which is arranged to be engaged with the recessed portion (11c) of the shaft portion (11a).

3. The steering column apparatus as claimed in claim 1, wherein the restriction section (12) includes a raised portion (11f) formed in the shaft portion (11a) in a predetermined axial position, and a raised portion (10b) which is elastically deformable, which is formed in the movable plate (10), which protrudes from the movable plate (10) toward the insertion hole (10a) of the movable plate (10), and which is arranged to be engaged with the raised portion (11f) of the shaft portion (11a).

4. The steering column apparatus as claimed in claim 1, wherein the restriction section (12) includes a pair of engagement portions (10c) formed in an outer circumference portion of the movable plate (10), which is elastically deformable, and which is arranged to be engaged with an outer circumference portion of the movable flange (11).

5. The steering column apparatus as claimed in one of claims 1 to 4, wherein a plurality of the frictional plates (5) and a plurality of the movable plates (10) are alternately disposed between the movable flange (11) and the side bracket (3c); and the restriction section (12) is provided only to the shaft portion (11 a) and the movable plate (10) which is adjacent to the side bracket (3c).

6. The steering column apparatus as claimed in one of claims 1 to 3, wherein the steering column apparatus further includes a tilt frictional plate (5) having one end connected with the side bracket (3c), and a telescopic frictional plate (5) having one end connected with the distance bracket (4); and the tilt frictional plate (5) and the telescopic frictional plate (5) are disposed between the movable flange (11) and the movable plate (10).

## Patentansprüche

1. Lenksäulenvorrichtung, umfassend:
einen Mantel (1), der über eine Säulenklammer (3, 18a-18c) an einer Fahrzeugkarosserie gehalten wird,
eine Lenkwelle (2), die drehbar in dem Mantel (1) gehalten wird,
einen Kippmechanismus (18a-18c), der als die Säulenklammer (3, 18a-18c) dient und angeordnet ist, um den Mantel (1) derart zu fixieren, dass der Mantel (1) in einer Aufwärtsrichtung und in einer Abwärtsrichtung um eine an einem vorderen Teil des Fahrzeugs angeordnete Schwenkwelle (18c) bewegt wird, und/oder einen Teleskopmechanismus (4d), der angeordnet ist, um den Mantel (1) zu fixieren und einen oberen Mantel (1 b) oder einen unteren Mantel (1a) in einer Axialrichtung in Bezug auf jeweils den anderen des oberen Mantels (1 b) und unteren Mantels (1a) zu bewegen,
eine Seitenklammer (3), die als die Säulenklammer (3, 18a-18c) dient, an einem hinteren Teil der Fahrzeugkarosserie angeordnet ist und ein Loch (3d) aufweist,
eine Distanzklammer (4), die einstückig mit dem Mantel (1) ist und ein Loch (4d) aufweist,
einen Klemmmechanismus (13), der angeordnet ist, um den beweglichen Mantel (1) an der Seitenklammer (3c) zu fixieren, indem er die Distanzklammer (4) gegen die Seitenklammer (3c) in einem der Seitenklammer (3c) zugewandten Zustand drückt, sodass die Distanzklammer (4) gegen die Seitenklammer (3c) anstößt, wobei der Klemmmechanismus (13) umfasst:
einen Sperrbolzen (7), der in das Loch (3d) der Seitenklammer (3c) und das Loch (4d) der Distanzklammer (4) eingesteckt ist, und
einen Betätigungshebel (14),
wobei die Seitenklammer (3c) und die Distanzklammer (4) eingeschlossen und festgezogen sind,
einen beweglichen Flansch (11),
eine bewegliche Platte (10), die zwischen dem beweglichen Flansch (11) und der Seitenklammer (3c) angeordnet ist und ein Einsteckloch (10a) enthält,
eine Reibungsplatte (5), die zwischen dem beweglichen Flansch (11) und der beweglichen Platte (10) angeordnet ist, ein längliches Loch (5d) enthält, das sich in der Bewegungsrichtung des Mantels (1) erstreckt, und wenigstens ein mit der Seitenklammer (3c) oder der Distanzklammer (4) verbundenes Ende umfasst,
wobei wenigstens eines der Löcher (3d; 4d) der Seitenklammer (3c) und der Distanzklammer (4) als ein längliches Loch (3d; 4d), das sich entlang der Bewegungsrichtung des Mantels (1) erstreckt, ausgebildet ist,
**dadurch gekennzeichnet, dass**
der Mantel (1) den unteren Mantel (1a) und den oberen Mantel (1 b) umfasst,
der Klemmmechanismus (13) weiterhin umfasst:
einen Fixierungsnocken (13a), durch den sich der Sperrbolzen (7) erstreckt, um sich entlang des Sperrbolzens (7) zu bewegen, ohne sich dabei zu drehen, und
einen beweglichen Nocken (13b), durch den sich der Sperrbolzen (7) erstreckt, wobei der bewegliche Nocken (13b) angeordnet ist, um den Fixierungsnocken (13a) zu einem Endteil des Sperrbolzens (7) zu drücken, wenn er gedreht wird,
der Betätigungshebel (14) an dem beweglichen Nocken (13b) vorgesehen ist,
die Seitenklammer (3c) und die Distanzklammer (4) zwischen dem Fixierungsnocken (13a) und dem einen Endteil des Sperrbolzens (7) eingeschlossen und festgezogen sind,
der bewegliche Flansch (11) an der Fixierungsnockenseite und/oder der Endteilseite des Sperrbolzens (7) vorgesehen ist und einen in der Axialrichtung des Sperrbolzens (7) vorstehenden Wellenteil (11a) enthält,
der Wellenteil (11a) des beweglichen Flansches (11) in das Einsteckloch (10a) der beweglichen Platte (10) und in das längliche Loch (5d) der Reibungsplatte (5) eingesteckt ist,
der Wellenteil (11a) des beweglichen Flansches (11) einen nicht-kreisrunden Abschnitt umfasst, der parallele Flächen aufweist, die in Innenwände des länglichen Lochs (3d; 4d) der Seitenklammer (3c) und der Distanzklammer (4) eingreifen, und
ein Beschränkungsabschnitt (12) in der beweglichen Platte (10) und dem Wellenteil (11a) des beweglichen Flansches (11) vorgesehen ist und angeordnet ist, um eine Bewegung der beweglichen Platte (10) von einer vorbestimmten Axialposition des Wellenteils (11a) des beweglichen Flansches (11) in einer Richtung zu beschränken, in welcher die bewegliche Platte (10) von dem Wellenteil (11a) des beweglichen Flansches (11) gelöst wird.

2. Lenksäulenvorrichtung nach Anspruch 1, wobei der Beschränkungsabschnitt (12) einen vertieften Teil (11c) umfasst, der in dem Wellenteil (11a) an einer vorbestimmten Axialposition ausgebildet ist, und einen erhobenen Teil (10b), der elastisch verformt werden kann und in der beweglichen Platte (10) ausgebildet ist, von der beweglichen Platte (10) zu dem Einsteckloch (10a) der beweglichen Platte (10) vorsteht, und angeordnet ist, um in den vertieften Teil (11 c) des Wellenteils (11 a) einzugreifen.

3. Lenksäulenvorrichtung nach Anspruch 1, wobei der Beschränkungsabschnitt (12) einen erhobenen Teil (11f) umfasst, der in dem Wellenteil (11a) an einer vorbestimmten Axialposition ausgebildet ist, und einen erhobenen Teil (10b), der elastisch verformt werden kann und in der beweglichen Platte (10) ausgebildet ist, von der beweglichen Platte (10) zu dem Einsteckloch (10a) der beweglichen Platte (10) vorsteht, und angeordnet ist, um in den vertieften Teil (11c) des Wellenteils (11a) einzugreifen.

4. Lenksäulenvorrichtung nach Anspruch 1, wobei der Beschränkungsabschnitt (12) ein Paar von Eingreifteilen (10c) umfasst, die in einem Außenumfangsteil der beweglichen Platte (10) ausgebildet sind, elastisch verformt werden können und angeordnet sind, um mit einem Außenumfangsteil des beweglichen Flansches (11) einzugreifen.

5. Lenksäulenvorrichtung nach einem der Ansprüche 1 bis 4, wobei eine Vielzahl der Reibungsplatten (5) und eine Vielzahl von beweglichen Platten (10) alternierend zwischen dem beweglichen Flansch (11) und der Seitenklammer (3c) angeordnet sind und der Beschränkungsabschnitt (12) nur an dem Wellenteil (11a) und an der zu der Seitenklammer (3c) benachbarten beweglichen Platte (10) vorgesehen ist.

6. Lenksäulenvorrichtung nach einem der Ansprüche 1 bis 3, wobei die Lenksäulenvorrichtung weiterhin eine Kippreibungsplatte (5), deren eines Ende mit der Seitenklammer (3c) verbunden ist, und eine Teleskopreibungsplatte (5), deren eines Ende mit der Distanzklammer (4) verbunden ist, umfasst, wobei die Kippreibungsplatte (5) und die Teleskopreibungsplatte (5) zwischen dem beweglichen Flansch (11) und der beweglichen Platte (10) angeordnet sind.

## Revendications

1. Appareil de colonne de direction comprenant :
un manchon (1) qui est supporté à travers un support de colonne (3, 18a-18c) à un corps de véhicule ;
un arbre de direction (2) supporté de manière rotative dans le manchon (1) ;
au moins un mécanisme parmi un mécanisme d'inclinaison (18a-18c), qui sert de support de colonne (3, 18a-18c) et qui est agencé pour fixer le manchon (1) de telle sorte que le manchon (1) est déplacé en direction montante et en direction descendante autour d'un axe de pivotement (18c) disposé sur une partie avant du véhicule, et un mécanisme télescopique (4d) agencé pour fixer le manchon (1) de manière à déplacer un manchon parmi le manchon supérieur (1b) et le manchon inférieur (1a) en direction axiale par rapport à l'autre manchon parmi le manchon supérieur (1b) et le manchon inférieur (1a) ;
un support latéral (3) qui sert de support de colonne (3, 18a-18c), agencé sur une partie arrière du corps de véhicule et comportant un trou (3d) ;
un support d'écartement (4) intégré avec le manchon (1) et comportant un trou (4d) ;
un mécanisme de serrage (13) qui est agencé pour fixer le manchon mobile (1) au support latéral (3c) en poussant le support d'écartement (4) contre le support latéral (3c) dans un état où il fait face au support latéral (3c) de telle sorte que le support d'écartement (4) vient à butée contre le support latéral (3c), le mécanisme de serrage (13) comprenant :
un boulon de verrouillage (7) inséré dans le trou (3d) du support latéral (3c) et le trou (4d) du support d'écartement (4), et
un levier d'actionnement (14),
le support latéral (3c) et le support d'écartement (4) étant intercalés et serrés,
une bride mobile (11) ;
une plaque mobile (10) qui est agencée entre la bride mobile (11) et le support latéral (3c) et qui comprend un trou d'insertion (10a) ;
une plaque de friction (5) agencée entre la bride mobile (11) et la plaque mobile (10), qui comporte un trou oblong (5d) qui s'étend en direction de déplacement du manchon (1), et qui comporte au moins une extrémité connectée au support latéral (3c) ou au support d'écartement (4),
au moins l'un des trous (3d ; 4d) du support latéral (3c) et du support d'écartement (4) étant formé en un trou oblong (3d ; 4d) qui s'étend en direction de déplacement du manchon (1),
**caractérisé en ce que**
le manchon (1) comprend un manchon inférieur (1a) et un manchon supérieur (1b),
le mécanisme de serrage (13) comprend en outre :
une came de fixation (13a) qui est traversée par le boulon de verrouillage (7), agencée pour être déplacée le long du boulon de verrouillage (7), et restreinte en rotation, et
une came mobile (13b) qui est traversée par le boulon de verrouillage (7), agencée pour pousser la came de fixation (13a) vers une partie d'extrémité du boulon de verrouillage (7) qui est mis en rotation,
le levier d'actionnement (14) est pourvu sur la came mobile (13b),
le support latéral (3c) et le support d'écartement (4) sont intercalés et serrés entre la came de fixation (13a) et ladite partie d'extrémité du boulon de verrouillage (7),
la bride mobile (11) est pourvue sur au moins un côté parmi le côté came de fixation et le côté de ladite partie d'extrémité du boulon de verrouillage (7), et comporte une partie d'arbre (11a) qui ressort en direction axiale du boulon de verrouillage (7) ;
la partie d'arbre (11a) de la bride mobile (11) est insérée dans le trou d'insertion (10a) de la plaque mobile (10) et dans le trou oblong (5d) de la plaque de friction (5) ;
la partie d'arbre (11a) de la bride mobile (11) comportant une section non circulaire ayant des surfaces parallèles engagées avec des parois internes du trou oblong (3d ; 4d) du support latéral (3c) et du support d'écartement (4), et
une section de restriction (12) est pourvue dans la plaque mobile (10) et la partie d'arbre (11a) de la bride mobile (11), et est agencée pour restreindre la plaque mobile (10) en l'empêchant de se déplacer d'une position axiale prédéterminée de la partie d'arbre (11a) de la bride mobile (11) dans une direction où la plaque mobile (10) est détachée de la partie d'arbre (11a) de la bride mobile (11).

2. Appareil de colonne de direction selon la revendication 1, dans lequel la section de restriction (12) comprend une partie renfoncée (11c) formée dans la partie d'arbre (11a) dans une position axiale prédéterminée, et une partie relevée (10b) élastiquement déformable, formée dans la plaque mobile (10), dépassant de la plaque mobile (10) vers le trou d'insertion (10a) de la plaque mobile (10), et agencée pour s'engager avec la partie renfoncée (1c) de la partie d'arbre (11a).

3. Appareil de colonne de direction selon la revendication 1, dans lequel la section de restriction (12) comprend une partie relevée (11f) formée dans la partie d'arbre (11a) dans une position axiale prédéterminée, et une partie relevée (10b) élastiquement déformable, formée dans la plaque mobile (10), dépassant de la plaque mobile (10) vers le trou d'insertion (10a) de la plaque mobile (10), et agencée pour s'engager avec la partie relevée (11f) de la partie d'arbre (11a).

4. Appareil de colonne de direction selon la revendication 1, dans lequel la section de restriction (12) comprend une paire de parties d'engagement (10c) formées dans une partie de circonférence externe de la plaque mobile (10) qui est élastiquement déformable et agencée pour s'engager avec une partie de circonférence externe de la bride mobile (11).

5. Appareil de colonne de direction selon l'une des revendications 1 à 4, dans lequel une pluralité de dites plaques de friction (5) et une pluralité de dites plaques mobiles (10) sont agencées en alternance entre la bride mobile (11) et le support latéral (3c) ; et la section de restriction (12) est pourvue uniquement sur la partie d'arbre (11a) et la plaque mobile (10) qui est adjacente au support latéral (3c).

6. Appareil de colonne de direction selon l'une des revendications 1 à 3, dans lequel l'appareil de colonne de direction comprend en outre une plaque de friction d'inclinaison (5) dont une extrémité est connectée au support latéral (3c), et une plaque de friction télescopique (5) dont une extrémité est connectée au support d'écartement (4) ; et la plaque de friction d'inclinaison (5) et la plaque de friction télescopique (5) sont agencées entre la bride mobile (11) et la plaque mobile (10).
